(19) Europäisches Patentamt
European Patent Office
Office européen des brevets

(11) **EP 3 839 364 B1**

(12) **EUROPEAN PATENT SPECIFICATION**

(45) Date of publication and mention
of the grant of the patent:
**23.07.2025 Bulletin 2025/30**

(21) Application number: **19897374.5**

(22) Date of filing: **30.05.2019**

(51) International Patent Classification (IPC):
*G05D 23/19* (2006.01)   *F24F 11/46* (2018.01)
*F24F 11/64* (2018.01)   *F24F 11/70* (2018.01)
*F24F 11/62* (2018.01)   *F24F 5/00* (2006.01)
*F24F 130/10* (2018.01)

(52) Cooperative Patent Classification (CPC):
**F24F 11/46; F24F 5/00; F24F 11/62; F24F 11/64;
F24F 11/70; G05D 23/1902; G05D 23/1931;**
F24F 2130/10

(86) International application number:
**PCT/CN2019/089189**

(87) International publication number:
**WO 2020/119038 (18.06.2020 Gazette 2020/25)**

(54) **METHOD FOR CONTROLLING AIR CONDITIONER**

VERFAHREN ZUR STEUERUNG EINER KLIMAANLAGE

PROCÉDÉ DE COMMANDE DE CLIMATISEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.12.2018   CN 201811533624**

(43) Date of publication of application:
**23.06.2021   Bulletin 2021/25**

(73) Proprietors:
• **GD Midea Heating & Ventilating Equipment Co.,
Ltd.**
**Foshan, Guangdong 528311 (CN)**
• **Midea Group Co., Ltd.**
**Foshan, Guangdong 528311 (CN)**

(72) Inventor: **LI, Yuanyang**
**Foshan, Guangdong 528311 (CN)**

(74) Representative: **Whitlock, Holly Elizabeth Ann
Maucher Jenkins
Seventh Floor Offices
Artillery House
11-19 Artillery Row
London SW1P 1RT (GB)**

(56) References cited:
CN-A- 104 534 617    CN-A- 104 791 903
CN-A- 106 338 127    CN-A- 108 224 632
CN-A- 109 654 665    CN-B- 104 534 617
CN-B- 105 571 063    US-A1- 2018 031 261

## Description

### TECHNICAL FIELD

The present invention relates to the technical field of air conditioning equipment, in particular to a method for controlling an air conditioner.

CN 105 571 063 B discloses a shallow geothermal energy source management system and an implementation method thereof. The shallow geothermal energy source management system comprises an energy source data acquisition unit, a data warehouse storage unit and a data mining and analyzing unit. In particular, current weather conditions like weather, wind, temperature, humidity, etc. are recorded by a weather condition module of the geothermal energy source management system and are used as additional data on energy consumption and energy efficiency for the day. The collected experimental data and historical operation date of the system predict the air conditioning load at a future time according to a prediction algorithm model, host characteristics and a cycle period as well as the cooling capacity required of the load and the operating parameters of the system.

### BACKGROUND

The load of the central refrigerating air-conditioning system is different in different seasons or moments due to the large change of the internal load of the building and the external environment in different times. The existing air conditioner works in a constant working state in operation, so that the condition that the working condition of the air conditioner is not matched with the internal load and the external environment of the current building can occur, and unnecessary energy waste caused by the fact that the air conditioner cannot meet the temperature regulation requirement of a user or the working condition of the air conditioner exceeds the current load can be generated.

### SUMMARY

The present invention aims to solve at least one of the technical problems in the related art to some extent.

Therefore, the present invention provides a method for controlling an air conditioner, which can improve the control precision of the air conditioner and reduce the energy consumption of the air conditioner.

The invention is as defined in the appended claims.

In order to solve the problems, the method for controlling an air conditioner comprising a chilled water circulating sysem in the embodiment of the first aspect of the present invention includes: determining, according to a historical time, a historical refrigerating capacity and historical outdoor weather parameters corresponding to the historical time, and current outdoor weather parameters, a relational expression of a current refrigerating capacity prediction value to be: the current refrigerating capacity prediction value = A * load time compensation coefficient * f1; determining a water outlet temperature time compensation value according to the current outdoor weather parameters and a historical water outlet temperature; and determining, according to a reference water outlet temperature or a reference water return temperature and the water outlet temperature time compensation value, a temperature control target value so as to control a water outlet temperature of a master machine, wherein A is a constant greater than zero, the load time compensation coefficient is preset according to a current use of a building, and f1 is the historical refrigerating capacity corresponding to the current outdoor weather parameters.

According to the method for controlling an air conditioner provided by the present invention, historical refrigerating data in a current building is obtained through a current database or a cloud database, wherein the historical refrigerating data specifically includes historical time (with its unit corresponding to year, month and day), historical weather parameters corresponding to each historical time and corresponding historical refrigerating capacity. Through comparing and analyzing current time and current outdoor weather parameters with historical refrigerating data to determine a relational expression of a current refrigerating capacity prediction value, wherein the relational expression is specifically expressed as: the current refrigerating capacity prediction value = A * load time compensation coefficient * f1. In the formula, A is a constant greater than zero, the load time compensation coefficient is preset according to a current use of a building, specifically, the load time compensation coefficient is a compensation coefficient influenced by the load inside the building, and the compensation coefficient is related to the habit of people using the building and the flow of people and is directly related to the industrial state inside the building, and f1 (outdoor weather parameter) is the historical refrigerating capacity corresponding to the current outdoor weather parameters. A corresponding load time compensation coefficient is set according to the current use condition in the current building to adjust the historical refrigerating capacity so as to obtain a prediction value of the current refrigerating capacity.

Furthermore, the compensation value of the water outlet temperature is obtained according to the current outdoor weather parameters and the historical water outlet temperature. The step of determining a water outlet temperature time compensation value according to the current outdoor weather parameters and a historical water outlet temperature specifically includes: acquiring the historical water outlet temperature corresponding to the current outdoor weather parameters; and determining the water outlet temperature time compensation value according to the load time compensation coefficient and the historical water outlet temperature. Finally a temperature control target value is determined according to the reference water outlet temperature or the reference water return temperature and the water outlet temperature time compensation value, and the water outlet temperature of the master machine is controlled through the temperature control target value. By applying the control method provided by the present invention, the air conditioner can comprehensively analyze the prediction value of the current refrigerating capacity according to the historical data and the current outdoor environment in the working process, and revise the running state of the air conditioner in real time according to the calculated prediction value of the current refrigerating capacity, so that the air conditioner can make follow-up adjustment according to the historical refrigerating data, the historical weather data and the current weather data of the current environment According to the air conditioner, the working energy consumption can be greatly reduced while the temperature regulation requirement is met, so that the comfort level of a user is provided while the accurate load requirement is met, the energy consumption of the air conditioner is reduced, the load cruising of the air conditioner is further realized, the control precision of the air conditioner is improved, the energy consumption of the air conditioner is reduced, and the use cost of the user is reduced.

In particular, in the working process of the existing air-conditioning equipment, the load of the central refrigerating air-conditioning system is different in different seasons or moments due to the large change of the internal load of the building and the external environment in different times. In this way, if the air conditioner works in a constant working state in operation, the technical problem that the working condition of the air conditioner is not matched with the internal load and the external environment of the current building can occur, and unnecessary energy waste caused by the fact that the air conditioner cannot meet the temperature regulation requirement of a user or the working condition of the air conditioner exceeds the current load can be generated. Aiming at the technical problem, the invention provides a control method capable of acquiring the load of an air conditioner in real time, wherein the control method defines a calculation formula for determining a prediction value of the current refrigerating capacity through the historical refrigerating capacity, the historical outdoor weather parameters and the current outdoor weather parameters in the historical time, wherein the historical refrigerating capacity and the historical outdoor parameters can serve as the load reference value in the current building, so that the load error caused by different internal structures of different buildings or different building materials is avoided. The current outdoor weather parameter is a load reference value of the current environment and is used for reducing the error between the current environment load and the preset environment load. After the prediction value of the current refrigerating capacity is calculated, the operation of the air conditioner is controlled through the prediction value, so that the air conditioner can revise and calibrate the current working load through historical load parameters and the current external environment load in the working process. Therefore, the matching degree of the working condition of the air conditioner and the actual load is greatly improved, the influence of environmental factors on the operation of the air conditioner is reduced, the work efficiency is improved, the energy consumption is reduced, and the technical problems in the prior art are solved perfectly.

According to the technical solution, the historical water outlet temperature corresponding to the current outdoor weather parameters is obtained in the working process of the air conditioner, and the water outlet temperature time compensation value is obtained according to the load time compensation coefficient and the historical water outlet temperature. The water outlet temperature time compensation value is obtained through calculation, so that the working states of the water separator and the water collector can be correspondingly adjusted according to the water outlet temperature time compensation value in the working process of the air conditioner, the current load of the air conditioner is adjusted through changing the water outlet time, and the historical water outlet temperature corresponding to the current outdoor weather parameter is taken as a reference value of the water outlet temperature time compensation value, so that the calculation result is closer to the air conditioner load in the current environment. Therefore, the accuracy of the control method is greatly improved, the air conditioner adopting the control method can select the optimal working state in different environments, the intelligent degree of products is improved, the control accuracy is improved, and user experience is improved.

In any of the technical solutions, preferably, the method for controlling an air conditioner further includes: acquiring the historical water outlet temperature corresponding to the current outdoor weather parameters, and taking the historical water outlet temperature as the reference water outlet temperature; and taking a sum of the reference water outlet temperature and the water outlet temperature time compensation value as a target water outlet temperature.

In the technical solution, the historical water outlet temperature corresponding to the current outdoor weather parameters is taken as the reference water outlet temperature, and a water outlet temperature time compensation value is added on such basis to obtain a target water outlet temperature. Under the condition that the general conditions are consistent, the comparison value of the water outlet temperature and the outdoor weather parameters obtained in the historical statistical process has the most reference value, so that the primary positioning of the target water outlet temperature can be quickly realized by taking the historical water outlet temperature corresponding to the current outdoor weather temperature as the reference value of the current water outlet temperature, thereby avoiding the large deviation of the target water outlet temperature. On this basis, a reference water outlet temperature is added with a water outlet temperature time compensation value to obtain a target water outlet temperature, so that the control method can further calibrate the target water outlet temperature, the target water outlet temperature can be matched with the current load of the air conditioner, the energy consumption of the air conditioner is reduced as much as possible under the condition that the air conditioner can meet the working requirements of users, the product control flow is optimized, the control accuracy is improved, the product performance is improved, and the product energy consumption is reduced.

In any of the technical solutions, preferably, the method includes acquiring a historical water return temperature corresponding to the outdoor weather parameters, and taking the historical water return temperature as the reference water return temperature; and a target water outlet temperature being equal to subtracting a difference value between a current chilled water inlet temperature and a current chilled water outlet temperature from a sum of the reference water return temperature and the water outlet temperature time compensation value.

According to the technical solution, the historical water return temperature corresponding to the current outdoor weather parameters is taken as the reference water return temperature, the water return temperature time compensation value is added on such basis, and the difference value between the current chilled water inlet temperature and the current chilled water out temperature is subtracted to obtain the target water return temperature. Under the condition that the general conditions are consistent, the comparison value of the water return temperature and the outdoor weather parameters obtained in the historical statistical process has the most reference value, so that the preliminary positioning of the target water outlet temperature can be quickly realized by taking the historical water return temperature corresponding to the current outdoor weather temperatures as the reference value of the current water return temperature, thereby avoiding the large deviation of the target water outlet temperature. On this basis, the reference water return temperature is added with the water outlet temperature time compensation value, and the temperature difference between the chilled water inlet temperature and the chilled water out temperature is subtracted to obtain the target water outlet temperature, so that the control method can further calibrate the target water outlet temperature, the target water outlet temperature can be matched with the current load of the air conditioner, the energy consumption of the air conditioner is reduced as much as possible under the condition that the air conditioner can meet the working requirements of users, the product control flow is optimized, the control accuracy is improved, the product performance is improved, and the product energy consumption is reduced.

In any of the technical solutions, preferably, the method for controlling an air conditioner further includes: determining a real-time refrigerating capacity according to the current chilled water inlet temperature, the current chilled water outlet temperature and chilled water flow; and when a difference value between the real-time refrigerating capacity and the current refrigerating capacity prediction value exceeds a preset range, updating the load time compensation coefficient to determine the current refrigerating capacity prediction value and the water outlet temperature time compensation value again.

According to the technical solution, the real-time refrigerating capacity of the current air conditioner is obtained through the current chilled water inlet temperature, the current chilled water outlet temperature and the chilled water flow. Then the real-time refrigerating capacity is compared with the current refrigerating capacity prediction value. When the difference value between the real-time refrigerating capacity and the current refrigerating capacity prediction value exceeds a preset range, the load time compensation coefficient is updated, and the current refrigerating capacity prediction value and the water outlet temperature time compensation value are determined again. Through comparing the real-time refrigerating capacity with the refrigerating capacity prediction value, the real-time refrigerating capacity of the air conditioner in the working process and the deviation condition of the predicted refrigerating capacity obtained through calculation can be monitored at any time. When the deviation is too large, it indicates that the working condition of the air conditioner and the outdoor weather parameters are greatly changed, so that the reference water return temperature obtained by comparison and the calculated water outlet temperature time compensation value are not applicable, and further deviation of the air conditioner can be avoided by reacquiring the outdoor weather parameters and recalculating the refrigerating capacity prediction value and the water outlet temperature compensation value under the condition, thereby realizing real-time calibration of the air conditioner. The normal work of the air conditioner is prevented from being influenced by external factors, so that the technical effects of optimizing the product control flow, improving the control accuracy, improving the product performance and reducing the energy consumption of the product are achieved.

In any technical solution of the person, preferably, the method for controlling an air conditioner further includes: sending a temperature control instruction to adjust the temperature control target value according to a preset frequency.

In the technical solution, a time delay control algorithm is adopted in the control method, a temperature control instruction is calculated and sent, and the intelligent temperature control target value is adjusted, so that the influence of the time delay effect on the calculation result can be reduced, the accuracy and the reliability of the control instruction can be greatly improved, the air conditioner can select the working state which is most fit with the current load under the guidance of the control method, and the deviation of the air conditioner in the working process can be further reduced. Furthermore, the technical effects of optimizing the product control flow, improving the control accuracy, improving the product performance and reducing the energy consumption of the product are achieved.

As background information, the present disclosure provides a device for controlling an air conditioner for a building, the air conditioner comprising a chilled water circulating system, including: a memory for storing a computer program; a processor for executing the computer program to implement the following steps: determining, according to a historical time, a historical refrigerating capacity and historical outdoor weather parameters corresponding to the historical time, and current outdoor weather parameters, a relational expression of a current refrigerating capacity prediction value to be: the current refrigerating capacity prediction value = A * load time compensation coefficient * f1 (outdoor weather parameter); determining a water outlet temperature time compensation value according to the current outdoor weather parameters and a historical water outlet temperature; and determining, according to a reference water outlet temperature or a reference water return temperature and the water outlet temperature time compensation value, a temperature control target value so as to control a water outlet temperature of a master machine, wherein A is a constant greater than zero, the load time compensation coefficient is preset according to a current use of a building, and f1 (outdoor weather parameter) is the historical refrigerating capacity corresponding to the current outdoor weather parameters.

According to the device for controlling an air conditioner, historical refrigerating data in a current building is obtained through a current database or a cloud database, wherein the historical refrigerating data specifically includes historical time (with its unit corresponding to year, month and day), historical weather parameters corresponding to each historical time and corresponding historical refrigerating capacity. Through comparing and analyzing current time and current outdoor weather parameters with historical refrigerating data to determine a relational expression of a current refrigerating capacity prediction value, wherein the relational expression is specifically expressed as: the current refrigerating capacity prediction value = A * load time compensation coefficient * f1. In the formula, A is a constant greater than zero, the load time compensation coefficient is preset according to a current use of a building, specifically, the load time compensation coefficient is a compensation coefficient influenced by the load inside the building, and the compensation coefficient is related to the habit of people using the building and the flow of people and is directly related to the industrial state inside the building, and f1 (outdoor weather parameter) is the historical refrigerating capacity corresponding to the current outdoor weather parameters. A corresponding load time compensation coefficient is set according to the current use condition in the current building to adjust the historical refrigerating capacity so as to obtain a prediction value of the current refrigerating capacity.

Furthermore, the compensation value of the water outlet temperature is obtained according to the current outdoor weather parameters and the historical water outlet temperature. The processor is used for executing the computer program to implement the step of determining a water outlet temperature time compensation value according to the current outdoor weather parameters and a historical water outlet temperature which specifically includes: acquiring the historical water outlet temperature corresponding to the current outdoor weather parameters; and determining the water outlet temperature time compensation value according to the load time compensation coefficient and the historical water outlet temperature. Finally a temperature control target value is determined according to the reference water outlet temperature or the reference water return temperature and the water outlet temperature time compensation value, and the water outlet temperature of the master machine is controlled through the temperature control target value. By applying the control method provided by the present invention, the air conditioner can comprehensively analyze the prediction value of the current refrigerating capacity according to the historical data and the current outdoor environment in the working process, and revise the running state of the air conditioner in real time according to the calculated prediction value of the current refrigerating capacity, so that the air conditioner can make follow-up adjustment according to the historical refrigerating data, the historical weather data and the current weather data of the current environment. According to the air conditioner, the working energy consumption can be greatly reduced while the temperature regulation requirement is met, so that the comfort level of a user is provided while the accurate load requirement is met, the energy consumption of the air conditioner is reduced, the load cruising of the air conditioner is further realized, the control precision of the air conditioner is improved, the energy consumption of the air conditioner is reduced, and the use cost of the user is reduced.

The historical water outlet temperature corresponding to the current outdoor weather parameters is obtained in the working process of the air conditioner, and the water outlet temperature time compensation value is obtained according to the load time compensation coefficient and the historical water outlet temperature. The water outlet temperature time compensation value is obtained through calculation, so that the working states of the water separator and the water collector can be correspondingly adjusted according to the water outlet temperature time compensation value in the working process of the air conditioner, the current load of the air conditioner is adjusted through changing the water outlet time, and the historical water outlet temperature corresponding to the current outdoor weather parameter is taken as a reference value of the water outlet temperature time compensation value, so that the calculation result is closer to the air conditioner load in the current environment. Therefore, the accuracy of the control method is greatly improved, the air conditioner adopting the control method can select the optimal working state in different environments, the intelligent degree of products is improved, the control accuracy is improved, and user experience is improved.

The processor is further configured to execute the computer program to implement the step of: acquiring the historical water outlet temperature corresponding to the current outdoor weather parameters, and taking the historical water outlet temperature as the reference water outlet temperature; and a target water outlet temperature being equal to a sum of the reference water outlet temperature and the water outlet temperature time compensation value.

The historical water outlet temperature corresponding to the current outdoor weather parameters is taken as the reference water outlet temperature, and a water outlet temperature time compensation value is added on such basis to obtain a target water outlet temperature. Under the condition that the general conditions are consistent, the comparison value of the water outlet temperature and the outdoor weather parameters obtained in the historical statistical process has the most reference value, so that the primary positioning of the target water outlet temperature can be quickly realized by taking the historical water outlet temperature corresponding to the current outdoor weather temperature as the reference value of the current water outlet temperature, thereby avoiding the large deviation of the target water outlet temperature. On this basis, a reference water outlet temperature is added with a water outlet temperature time compensation value to obtain a target water outlet temperature, so that the control method can further calibrate the target water outlet temperature, the target water outlet temperature can be matched with the current load of the air conditioner, the energy consumption of the air conditioner is reduced as much as possible under the condition that the air conditioner can meet the working requirements of users, the product control flow is optimized, the control accuracy is improved, the product performance is improved, and the product energy consumption is reduced.

The processor is further configured to execute the computer program to implement the step of: acquiring a historical water return temperature corresponding to the outdoor weather parameters, and taking the historical water return temperature as the reference water return temperature; and a target water outlet temperature being equal to subtracting a difference value between a current chilled water inlet temperature and a current chilled water outlet temperature from a sum of the reference water return temperature and the water outlet temperature time compensation value.

The historical water return temperature corresponding to the current outdoor weather parameters is taken as the reference water return temperature, the water return temperature time compensation value is added on such basis, and the difference value between the current chilled water inlet temperature and the current chilled water out temperature is subtracted to obtain the target water return temperature. Under the condition that the general conditions are consistent, the comparison value of the water return temperature and the outdoor weather parameters obtained in the historical statistical process has the most reference value, so that the preliminary positioning of the target water outlet temperature can be quickly realized by taking the historical water return temperature corresponding to the current outdoor weather temperatures as the reference value of the current water return temperature, thereby avoiding the large deviation of the target water outlet temperature. On this basis, the reference water return temperature is added with the water outlet temperature time compensation value, and the temperature difference between the chilled water inlet temperature and the chilled water out temperature is subtracted to obtain the target water outlet temperature, so that the control method can further calibrate the target water outlet temperature, the target water outlet temperature can be matched with the current load of the air conditioner, the energy consumption of the air conditioner is reduced as much as possible under the condition that the air conditioner can meet the working requirements of users, the product control flow is optimized, the control accuracy is improved, the product performance is improved, and the product energy consumption is reduced.

The processor is further configured to execute the computer program to implement the steps of: determining real-time refrigerating capacity according to the current chilled water inlet temperature, the current chilled water outlet temperature and chilled water flow; and when a difference value between the real-time refrigerating capacity and the current refrigerating capacity prediction value exceeds a preset range, updating the load time compensation coefficient to determine the current refrigerating capacity prediction value and the water outlet temperature time compensation value again.

The real-time refrigerating capacity of the current air conditioner is obtained through the current chilled water inlet temperature, the current chilled water outlet temperature and the chilled water flow. Then the real-time refrigerating capacity is compared with the current refrigerating capacity prediction value. When the difference value between the real-time refrigerating capacity and the current refrigerating capacity prediction value exceeds a preset range, the load time compensation coefficient is updated, and the current refrigerating capacity prediction value and the water outlet temperature time compensation value are determined again. Through comparing the real-time refrigerating capacity with the refrigerating capacity prediction value, the real-time refrigerating capacity of the air conditioner in the working process and the deviation condition of the predicted refrigerating capacity obtained through calculation can be monitored at any time. When the deviation is too large, it indicates that the working condition of the air conditioner and the outdoor weather parameters are greatly changed, so that the reference water return temperature obtained by comparison and the calculated water outlet temperature time compensation value are not applicable, and further deviation of the air conditioner can be avoided by reacquiring the outdoor weather parameters and recalculating the refrigerating capacity prediction value and the water outlet temperature compensation value under the condition, thereby realizing real-time calibration of the air conditioner. The normal work of the air conditioner is prevented from being influenced by external factors, so that the technical effects of optimizing the product control flow, improving the control accuracy, improving the product performance and reducing the energy consumption of the product are achieved.

The processor is further configured to execute the computer program to implement the step of: sending a temperature control instruction to adjust the temperature control target value according to a preset frequency.

A time delay control algorithm is adopted in the control method, a temperature control instruction is calculated and sent, and the intelligent temperature control target value is adjusted, so that the influence of the time delay effect on the calculation result can be reduced, the accuracy and the reliability of the control instruction can be greatly improved, the air conditioner can select the working state which is most fit with the current load under the guidance of the control method, and the deviation of the air conditioner in the working process can be further reduced. Furthermore, the technical effects of optimizing the product control flow, improving the control accuracy, improving the product performance and reducing the energy consumption of the product are achieved.

As background information, the present disclosure further provides an air conditioner including the device for controlling an air conditioner as described in any one of the technical solutions, where by the air conditioner includes all the advantages of the device for controlling an air conditioner as described in any one of the technical solutions.

Additional aspects and advantages of the present invention will be apparent from the description which follows, or may be learned by practice of the present invention.

## BRIEF DESCRIPTION OF THE DRAWINGS

The foregoing and/or additional aspects and advantages of the present application will be apparent from and elucidated with reference to the embodiments described hereinafter with reference to the accompanying drawings, in which:

FIG. 1 illustrates a flowchart of a method for controlling an air conditioner according to an embodiment of the present invention;

FIG. 2 illustrates a flowchart of a method for controlling an air conditioner according to another embodiment of the present invention;

FIG. 3 illustrates a flowchart of a method for controlling an air conditioner according to yet another embodiment of the present invention;

FIG. 4 illustrates a flowchart of a method for controlling an air conditioner according to yet another embodiment of the present invention;

FIG. 5 illustrates a flowchart of a method for controlling an air conditioner according to yet another embodiment of the present invention;

FIG. 6 illustrates a flowchart of a method for controlling an air conditioner according to yet another embodiment of the present invention;

FIG. 7 illustrates a block diagram of a device for controlling an air conditioner according to an embodiment of the present invention;

FIG. 8 illustrates a flowchart of a method for controlling an air conditioner according to a particular embodiment of the present invention;

FIG. 9 is a comparison graph of a load time compensation coefficient with a calculated water outlet temperature time compensation value of a method for controlling an air conditioner according to an embodiment of the present invention;

FIG. 10 illustrates a load prediction diagram of a method for controlling an air conditioner according to an embodiment of the present invention;

FIG. 11 shows a schematic view of a device for controlling an air conditioner according to an embodiment of the present invention;

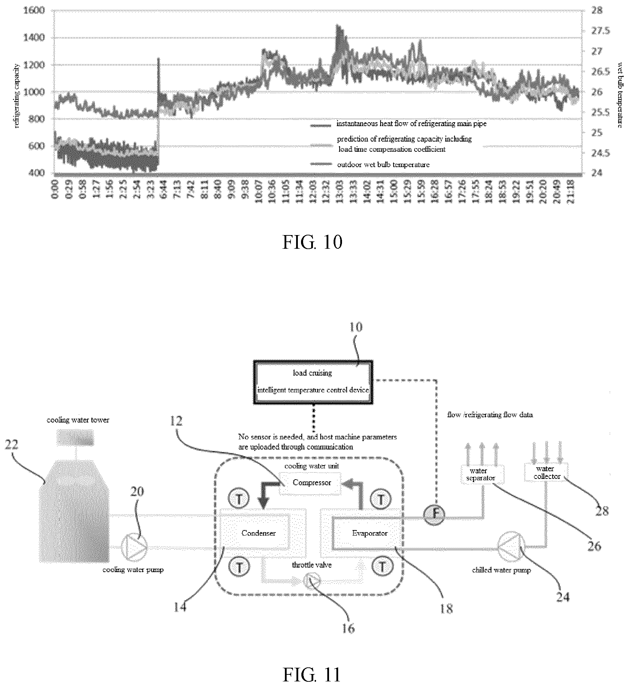

wherein the corresponding relationship between the reference numerals and the component names in FIG. 11 is listed as follows:

10 intelligent temperature control device, 12 compressor, 14 condenser, 16 throttle valve, 18 evaporator, 20 cooling water pump, 22 cooling water tower, 24 chilled water pump, 26 water separator, 28 water collector.

## DETAILED DESCRIPTION

In order that the objects, features and advantages of the present invention may be more clearly understood, the present invention is described in further detail below with reference to the accompanying drawings and detailed description. It should be noted that the embodiments and features in the embodiments of the present invention may be combined with one another without conflict.

In the following description, numerous specific details are set forth in order to provide a thorough understanding of the present invention, but the present invention may be practiced otherwise than as described herein, and therefore, the scope of protection of the present invention is not limited to the specific embodiments disclosed below and is defined by the claims.

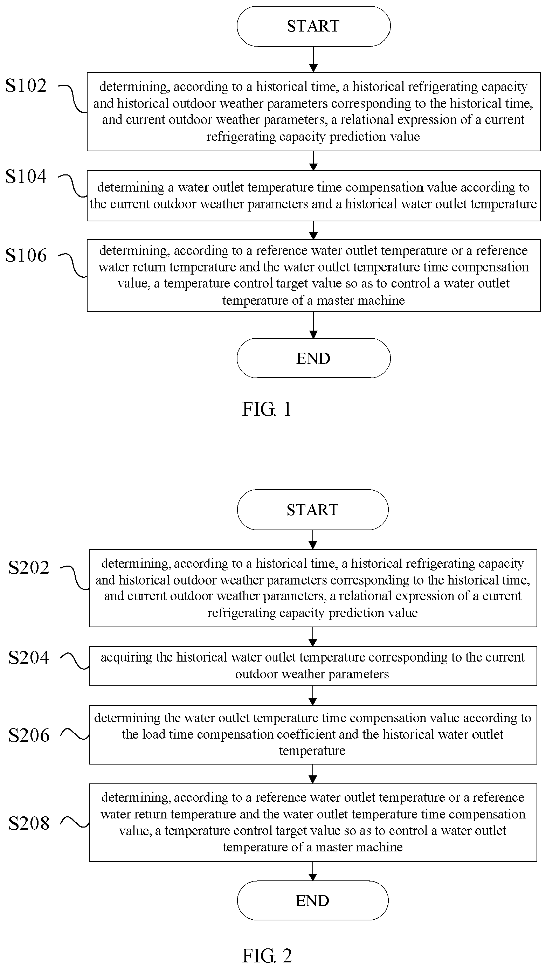

A method for controlling an air conditioner, a device for controlling an air conditioner, and an air conditioner provided according to some embodiments of the present invention are described below with reference to FIGS. 1 to 11.

As shown in FIG. 1, in an embodiment of the first aspect of the present invention, there is provided a method for controlling an air conditioner, including:

S102, determining, according to a historical time, a historical refrigerating capacity and historical outdoor weather parameters corresponding to the historical time, and current outdoor weather parameters, a relational expression of a current refrigerating capacity prediction value to be:

the current refrigerating capacity prediction value = A * load time compensation coefficient * f1 (outdoor weather parameter);

S104, determining a water outlet temperature time compensation value according to the current outdoor weather parameters and a historical water outlet temperature;

S106, determining, according to a reference water outlet temperature or a reference water return temperature and the water outlet temperature time compensation value, a temperature control target value so as to control a water outlet temperature of a master machine,

wherein A is a constant greater than zero, the load time compensation coefficient is preset according to a current use of a building, and f1 (outdoor weather parameter) is the historical refrigerating capacity corresponding to the current outdoor weather parameters.

According to the method for controlling an air conditioner provided by the present invention, historical refrigerating data in a current building is obtained through a current database or a cloud database, wherein the historical refrigerating data specifically includes historical time (with its unit corresponding to year, month and day), historical weather parameters corresponding to each historical time and corresponding historical refrigerating capacity. Through comparing and analyzing current time and current outdoor weather parameters with historical refrigerating data to determine a relational expression of a current refrigerating capacity prediction value, wherein the relational expression is specifically expressed as: the current refrigerating capacity prediction value = A * load time compensation coefficient * f1. In the formula, A is a constant greater than zero, the load time compensation coefficient is preset according to a current use of a building, specifically, the load time compensation coefficient is a compensation coefficient influenced by the load inside the building, and the compensation coefficient is related to the habit of people using the building and the flow of people and is directly related to the industrial state inside the building, and f1 (outdoor weather parameter) is the historical refrigerating capacity corresponding to the current outdoor weather parameters. A corresponding load time compensation coefficient is set according to the current use condition in the current building to adjust the historical refrigerating capacity so as to obtain a prediction value of the current refrigerating capacity.

Furthermore, the compensation value of the water outlet temperature is obtained according to the current outdoor weather parameters and the historical water outlet temperature. Finally a temperature control target value is determined according to the reference water outlet temperature or the reference water return temperature and the water outlet temperature time compensation value, and the water outlet temperature of the master machine is controlled through the temperature control target value. By applying the control method provided by the present invention, the air conditioner can comprehensively analyze the prediction value of the current refrigerating capacity according to the historical data and the current outdoor environment in the working process, and revise the running state of the air conditioner in real time according to the calculated prediction value of the current refrigerating capacity, so that the air conditioner can make follow-up adjustment according to the historical refrigerating data, the historical weather data and the current weather data of the current environment According to the air conditioner, the working energy consumption can be greatly reduced while the temperature regulation requirement is met, so that the comfort level of a user is provided while the accurate load requirement is met, the energy consumption of the air conditioner is reduced, the load cruising of the air conditioner is further realized, the control precision of the air conditioner is improved, the energy consumption of the air conditioner is reduced, and the use cost of the user is reduced.

In particular, in the working process of the existing air-conditioning equipment, the load of the central refrigerating air-conditioning system is different in different seasons or moments due to the large change of the internal load of the building and the external environment in different times. In this way, if the air conditioner works in a constant working state in operation, the technical problem that the working condition of the air conditioner is not matched with the internal load and the external environment of the current building can occur, and unnecessary energy waste caused by the fact that the air conditioner cannot meet the temperature regulation requirement of a user or the working condition of the air conditioner exceeds the current load can be generated. Aiming at the technical problem, the invention provides a control method capable of acquiring the load of an air conditioner in real time, wherein the control method defines a calculation formula for determining a prediction value of the current refrigerating capacity through the historical refrigerating capacity, the historical outdoor weather parameters and the current outdoor weather parameters in the historical time, wherein the historical refrigerating capacity and the historical outdoor parameters can serve as the load reference value in the current building, so that the load error caused by different internal structures of different buildings or different building materials is avoided. The current outdoor weather parameter is a load reference value of the current environment and is used for reducing the error between the current environment load and the preset environment load. After the prediction value of the current refrigerating capacity is calculated, the operation of the air conditioner is controlled through the prediction value, so that the air conditioner can revise and calibrate the current working load through historical load parameters and the current external environment load in the working process. Therefore, the matching degree of the working condition of the air conditioner and the actual load is greatly improved, the influence of environmental factors on the operation of the air conditioner is reduced, the work efficiency is improved, the energy consumption is reduced, and the technical problems in the prior art are solved perfectly.

In one embodiment of the present invention, as shown in FIG. 2, the method for controlling an air conditioner includes:

S202, determining, according to a historical time, a historical refrigerating capacity and historical outdoor weather parameters corresponding to the historical time, and current outdoor weather parameters, a relational expression of a current refrigerating capacity prediction value;

S204, acquiring the historical water outlet temperature corresponding to the current outdoor weather parameters;

S206, determining the water outlet temperature time compensation value according to the load time compensation coefficient and the historical water outlet temperature;

S208, determining, according to a reference water outlet temperature or a reference water return temperature and the water outlet temperature time compensation value, a temperature control target value so as to control a water outlet temperature of a master machine.

In the embodiment, the historical water outlet temperature corresponding to the current outdoor weather parameters is obtained in the working process of the air conditioner, and the water outlet temperature time compensation value is obtained according to the load time compensation coefficient and the historical water outlet temperature. The water outlet temperature time compensation value is obtained through calculation, so that the working states of the water separator and the water collector can be correspondingly adjusted according to the water outlet temperature time compensation value in the working process of the air conditioner, the current load of the air conditioner is adjusted through changing the water outlet time, and the historical water outlet temperature corresponding to the current outdoor weather parameter is taken as a reference value of the water outlet temperature time compensation value, so that the calculation result is closer to the air conditioner load in the current environment. Therefore, the accuracy of the control method is greatly improved, the air conditioner adopting the control method can select the optimal working state in different environments, the intelligent degree of products is improved, the control accuracy is improved, and user experience is improved.

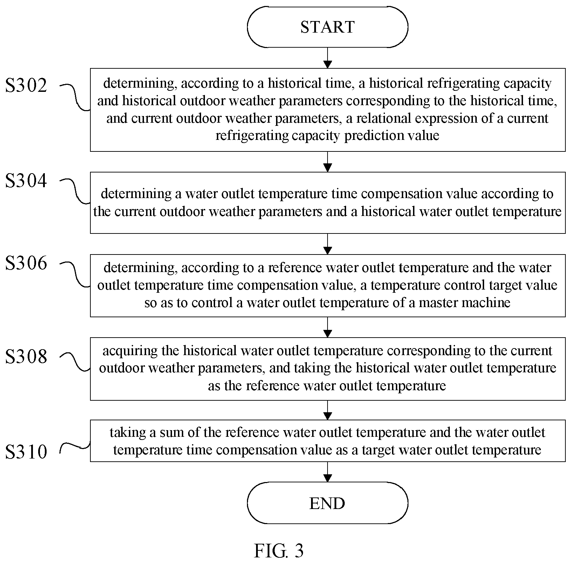

In one embodiment of the present invention as shown in FIG. 3, a method for controlling an air conditioner includes:

S302, determining, according to a historical time, a historical refrigerating capacity and historical outdoor weather parameters corresponding to the historical time, and current outdoor weather parameters, a relational expression of a current refrigerating capacity prediction value;

S304, determining a water outlet temperature time compensation value according to the current outdoor weather parameters and a historical water outlet temperature;

S306, determining, according to a reference water outlet temperature and the water outlet temperature time compensation value, a temperature control target value so as to control a water outlet temperature of a master machine;

S308, acquiring the historical water outlet temperature corresponding to the current outdoor weather parameters, and taking the historical water outlet temperature as the reference water outlet temperature;

S310, a target water outlet temperature being equal to a sum of the reference water outlet temperature and the water outlet temperature time compensation value.

In the embodiment, the historical water outlet temperature corresponding to the current outdoor weather parameters is taken as the reference water outlet temperature, and a water outlet temperature time compensation value is added on such basis to obtain a target water outlet temperature. Under the condition that the general conditions are consistent, the comparison value of the water outlet temperature and the outdoor weather parameters obtained in the historical statistical process has the most reference value, so that the primary positioning of the target water outlet temperature can be quickly realized by taking the historical water outlet temperature corresponding to the current outdoor weather temperature as the reference value of the current water outlet temperature, thereby avoiding the large deviation of the target water outlet temperature. On this basis, a reference water outlet temperature is added with a water outlet temperature time compensation value to obtain a target water outlet temperature, so that the control method can further calibrate the target water outlet temperature, the target water outlet temperature can be matched with the current load of the air conditioner, the energy consumption of the air conditioner is reduced as much as possible under the condition that the air conditioner can meet the working requirements of users, the product control flow is optimized, the control accuracy is improved, the product performance is improved, and the product energy consumption is reduced.

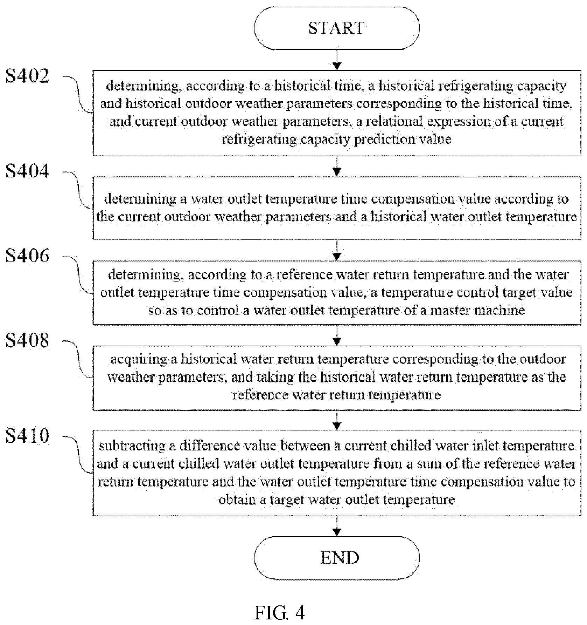

In one embodiment of the present invention, preferably, as shown in FIG. 4, the method for controlling an air conditioner includes:

S402, determining, according to a historical time, a historical refrigerating capacity and historical outdoor weather parameters corresponding to the historical time, and current outdoor weather parameters, a relational expression of a current refrigerating capacity prediction value;

S404, determining a water outlet temperature time compensation value according to the current outdoor weather parameters and a historical water outlet temperature;

S406, determining, according to a reference water return temperature and the water outlet temperature time compensation value, a temperature control target value so as to control a water outlet temperature of a master machine;

S408, acquiring a historical water return temperature corresponding to the outdoor weather parameters, and taking the historical water return temperature as the reference water return temperature;

S410, a target water outlet temperature being equal to subtracting a difference value between a current chilled water inlet temperature and a current chilled water outlet temperature from a sum of the reference water return temperature and the water outlet temperature time compensation value.

In the embodiment, the historical water return temperature corresponding to the current outdoor weather parameters is taken as the reference water return temperature, the water return temperature time compensation value is added on such basis, and the difference value between the current chilled water inlet temperature and the current chilled water out temperature is subtracted to obtain the target water return temperature. Under the condition that the general conditions are consistent, the comparison value of the water return temperature and the outdoor weather parameters obtained in the historical statistical process has the most reference value, so that the preliminary positioning of the target water outlet temperature can be quickly realized by taking the historical water return temperature corresponding to the current outdoor weather temperatures as the reference value of the current water return temperature, thereby avoiding the large deviation of the target water outlet temperature. On this basis, the reference water return temperature is added with the water outlet temperature time compensation value, and the temperature difference between the chilled water inlet temperature and the chilled water out temperature is subtracted to obtain the target water outlet temperature, so that the control method can further calibrate the target water outlet temperature, the target water outlet temperature can be matched with the current load of the air conditioner, the energy consumption of the air conditioner is reduced as much as possible under the condition that the air conditioner can meet the working requirements of users, the product control flow is optimized, the control accuracy is improved, the product performance is improved, and the product energy consumption is reduced.

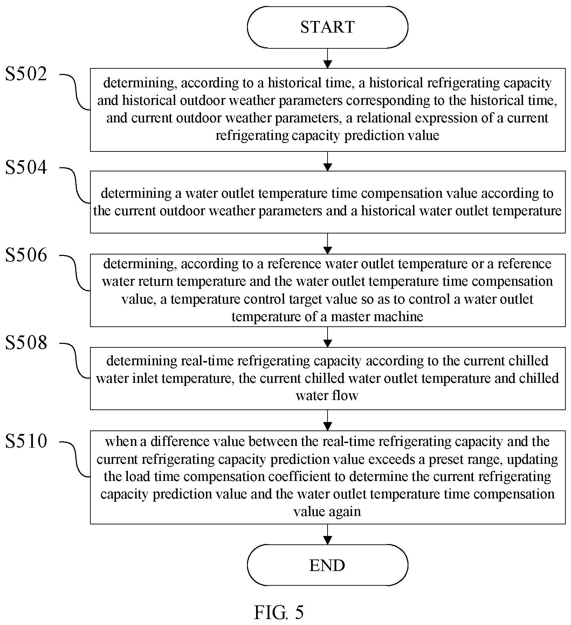

In one embodiment of the present invention, preferably, as shown in FIG. 5, the method for controlling an air conditioner includes:

S502, determining, according to a historical time, a historical refrigerating capacity and historical outdoor weather parameters corresponding to the historical time, and current outdoor weather parameters, a relational expression of a current refrigerating capacity prediction value;

S504, determining a water outlet temperature time compensation value according to the current outdoor weather parameters and a historical water outlet temperature;

S506, determining, according to a reference water outlet temperature or a reference water return temperature and the water outlet temperature time compensation value, a temperature control target value so as to control a water outlet temperature of a master machine;

S508, determining real-time refrigerating capacity according to the current chilled water inlet temperature, the current chilled water outlet temperature and chilled water flow;

S510, when a difference value between the real-time refrigerating capacity and the current refrigerating capacity prediction value exceeds a preset range, updating the load time compensation coefficient to determine the current refrigerating capacity prediction value and the water outlet temperature time compensation value again.

In the embodiment, the real-time refrigerating capacity of the current air conditioner is obtained through the current chilled water inlet temperature, the current chilled water outlet temperature and the chilled water flow. Then the real-time refrigerating capacity is compared with the current refrigerating capacity prediction value. When the difference value between the real-time refrigerating capacity and the current refrigerating capacity prediction value exceeds a preset range, the load time compensation coefficient is updated, and the current refrigerating capacity prediction value and the water outlet temperature time compensation value are determined again. Through comparing the real-time refrigerating capacity with the refrigerating capacity prediction value, the real-time refrigerating capacity of the air conditioner in the working process and the deviation condition of the predicted refrigerating capacity obtained through calculation can be monitored at any time. When the deviation is too large, it indicates that the working condition of the air conditioner and the outdoor weather parameters are greatly changed, so that the reference water return temperature obtained by comparison and the calculated water outlet temperature time compensation value are not applicable, and further deviation of the air conditioner can be avoided by reacquiring the outdoor weather parameters and recalculating the refrigerating capacity prediction value and the water outlet temperature compensation value under the condition, thereby realizing real-time calibration of the air conditioner. The normal work of the air conditioner is prevented from being influenced by external factors, so that the technical effects of optimizing the product control flow, improving the control accuracy, improving the product performance and reducing the energy consumption of the product are achieved.

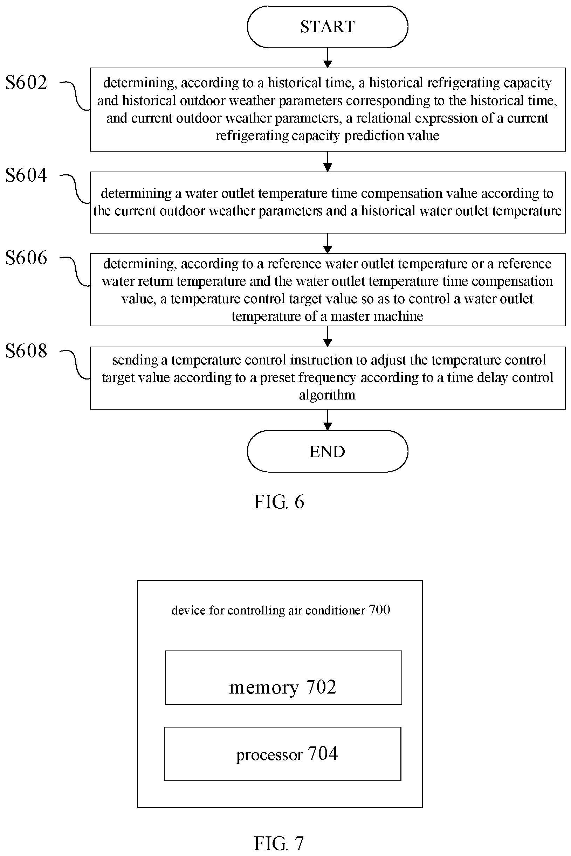

In one embodiment of the present invention, preferably, as shown in FIG. 6, the method for controlling an air conditioner includes:

> S602, determining, according to a historical time, a historical refrigerating capacity and historical outdoor weather parameters corresponding to the historical time, and current outdoor weather parameters, a relational expression of a current refrigerating capacity prediction value;
> S604, determining a water outlet temperature time compensation value according to the current outdoor weather parameters and a historical water outlet temperature;
> S606, determining, according to a reference water outlet temperature or a reference water return temperature and the water outlet temperature time compensation value, a temperature control target value so as to control a water outlet temperature of a master machine;
> S608, sending a temperature control instruction to adjust the temperature control target value according to a preset frequency according to a time delay control algorithm.

In the embodiment, a time delay control algorithm is adopted in the control method, a temperature control instruction is calculated and sent, and the intelligent temperature control target value is adjusted, so that the influence of the time delay effect on the calculation result can be reduced, the accuracy and the reliability of the control instruction can be greatly improved, the air conditioner can select the working state which is most fit with the current load under the guidance of the control method, and the deviation of the air conditioner in the working process can be further reduced. Furthermore, the technical effects of optimizing the product control flow, improving the control accuracy, improving the product performance and reducing the energy consumption of the product are achieved.

As shown in FIG. 7, in an embodiment of the second aspect of the present disclosure which is not part of the invention, there is provided a device 700 for controlling an air conditioner, including: a memory 702 for storing a computer program; a processor 704 for executing the computer program to implement the following steps: determining, according to a historical time, a historical refrigerating capacity and historical outdoor weather parameters corresponding to the historical time, and current outdoor weather parameters, a relational expression of a current refrigerating capacity prediction value to be: the current refrigerating capacity prediction value = A * load time compensation coefficient * f1 (outdoor weather parameter); determining a water outlet temperature time compensation value according to the current outdoor weather parameters and a historical water outlet temperature; and determining, according to a reference water outlet temperature or a reference water return temperature and the water outlet temperature time compensation value, a temperature control target value so as to control a water outlet temperature of a master machine, wherein A is a constant greater than zero, the load time compensation coefficient is preset according to a current use of a building, and f1 (outdoor weather parameter) is the historical refrigerating capacity corresponding to the current outdoor weather parameters.

According to the device for controlling an air conditioner provided by the present disclosure, historical refrigerating data in a current building is obtained through a current database or a cloud database, wherein the historical refrigerating data specifically includes historical time (with its unit corresponding to year, month and day), historical weather parameters corresponding to each historical time and corresponding historical refrigerating capacity. Through comparing and analyzing current time and current outdoor weather parameters with historical refrigerating data to determine a relational expression of a current refrigerating capacity prediction value, wherein the relational expression is specifically expressed as: the current refrigerating capacity prediction value = A * load time compensation coefficient * f1. In the formula, A is a constant greater than zero, the load time compensation coefficient is preset according to a current use of a building, specifically, the load time compensation coefficient is a compensation coefficient influenced by the load inside the building, and the compensation coefficient is related to the habit of people using the building and the flow of people and is directly related to the industrial state inside the building, and f1 (outdoor weather parameter) is the historical refrigerating capacity corresponding to the current outdoor weather parameters. A corresponding load time compensation coefficient is set according to the current use condition in the current building to adjust the historical refrigerating capacity so as to obtain a prediction value of the current refrigerating capacity.

Furthermore, the compensation value of the water outlet temperature is obtained according to the current outdoor weather parameters and the historical water outlet temperature. Finally a temperature control target value is determined according to the reference water outlet temperature or the reference water return temperature and the water outlet temperature time compensation value, and the water outlet temperature of the master machine is controlled through the temperature control target value. By applying the control method provided by the present disclosure, the air conditioner can comprehensively analyze the prediction value of the current refrigerating capacity according to the historical data and the current outdoor environment in the working process, and revise the running state of the air conditioner in real time according to the calculated prediction value of the current refrigerating capacity, so that the air conditioner can make follow-up adjustment according to the historical refrigerating data, the historical weather data and the current weather data of the current environment According to the air conditioner, the working energy consumption can be greatly reduced while the temperature regulation requirement is met, so that the comfort level of a user is provided while the accurate load requirement is met, the energy consumption of the air conditioner is reduced, the load cruising of the air conditioner is further realized, the control precision of the air conditioner is improved, the energy consumption of the air conditioner is reduced, and the use cost of the user is reduced.

In one embodiment of the present invention, preferably, the processor 704 is used for executing the computer program to implement the step of determining a water outlet temperature time compensation value according to the current outdoor weather parameters and a historical water outlet temperature which specifically includes: acquiring the historical water outlet temperature corresponding to the current outdoor weather parameters; and determining the water outlet temperature time compensation value according to the load time compensation coefficient and the historical water outlet temperature.

In the embodiment, the historical water outlet temperature corresponding to the current outdoor weather parameters is obtained in the working process of the air conditioner, and the water outlet temperature time compensation value is obtained according to the load time compensation coefficient and the historical water outlet temperature. The water outlet temperature time compensation value is obtained through calculation, so that the working states of the water separator and the water collector can be correspondingly adjusted according to the water outlet temperature time compensation value in the working process of the air conditioner, the current load of the air conditioner is adjusted through changing the water outlet time, and the historical water outlet temperature corresponding to the current outdoor weather parameter is taken as a reference value of the water outlet temperature time compensation value, so that the calculation result is closer to the air conditioner load in the current environment. Therefore, the accuracy of the control method is greatly improved, the air conditioner adopting the control method can select the optimal working state in different environments, the intelligent degree of products is improved, the control accuracy is improved, and user experience is improved.

In one embodiment of the present invention, preferably, the processor 704 is further configured to execute the computer program to implement the step of: acquiring the historical water outlet temperature corresponding to the current outdoor weather parameters, and taking the historical water outlet temperature as the reference water outlet temperature; and a target water outlet temperature being equal to a sum of the reference water outlet temperature and the water outlet temperature time compensation value.

In the embodiment, the historical water outlet temperature corresponding to the current outdoor weather parameters is taken as the reference water outlet temperature, and a water outlet temperature time compensation value is added on such basis to obtain a target water outlet temperature. Under the condition that the general conditions are consistent, the comparison value of the water outlet temperature and the outdoor weather parameters obtained in the historical statistical process has the most reference value, so that the primary positioning of the target water outlet temperature can be quickly realized by taking the historical water outlet temperature corresponding to the current outdoor weather temperature as the reference value of the current water outlet temperature, thereby avoiding the large deviation of the target water outlet temperature. On this basis, a reference water outlet temperature is added with a water outlet temperature time compensation value to obtain a target water outlet temperature, so that the control method can further calibrate the target water outlet temperature, the target water outlet temperature can be matched with the current load of the air conditioner, the energy consumption of the air conditioner is reduced as much as possible under the condition that the air conditioner can meet the working requirements of users, the product control flow is optimized, the control accuracy is improved, the product performance is improved, and the product energy consumption is reduced.

In one embodiment of the present invention, preferably, the processor 704 is further configured to execute the computer program to implement the step of: acquiring a historical water return temperature corresponding to the outdoor weather parameters, and taking the historical water return temperature as the reference water return temperature; and a target water outlet temperature being equal to subtracting a difference value between a current chilled water inlet temperature and a current chilled water outlet temperature from a sum of the reference water return temperature and the water outlet temperature time compensation value.

In the embodiment, the historical water return temperature corresponding to the current outdoor weather parameters is taken as the reference water return temperature, the water return temperature time compensation value is added on such basis, and the difference value between the current chilled water inlet temperature and the current chilled water out temperature is subtracted to obtain the target water return temperature. Under the condition that the general conditions are consistent, the comparison value of the water return temperature and the outdoor weather parameters obtained in the historical statistical process has the most reference value, so that the preliminary positioning of the target water outlet temperature can be quickly realized by taking the historical water return temperature corresponding to the current outdoor weather temperatures as the reference value of the current water return temperature, thereby avoiding the large deviation of the target water outlet temperature. On this basis, the reference water return temperature is added with the water outlet temperature time compensation value, and the temperature difference between the chilled water inlet temperature and the chilled water out temperature is subtracted to obtain the target water outlet temperature, so that the control method can further calibrate the target water outlet temperature, the target water outlet temperature can be matched with the current load of the air conditioner, the energy consumption of the air conditioner is reduced as much as possible under the condition that the air conditioner can meet the working requirements of users, the product control flow is optimized, the control accuracy is improved, the product performance is improved, and the product energy consumption is reduced.

In one embodiment of the present invention, preferably, the processor 704 is further configured to execute the computer program to implement the steps of: determining real-time refrigerating capacity according to the current chilled water inlet temperature, the current chilled water outlet temperature and chilled water flow; and when a difference value between the real-time refrigerating capacity and the current refrigerating capacity prediction value exceeds a preset range, updating the load time compensation coefficient to determine the current refrigerating capacity prediction value and the water outlet temperature time compensation value again.

In the embodiment, the real-time refrigerating capacity of the current air conditioner is obtained through the current chilled water inlet temperature, the current chilled water outlet temperature and the chilled water flow. Then the real-time refrigerating capacity is compared with the current refrigerating capacity prediction value. When the difference value between the real-time refrigerating capacity and the current refrigerating capacity prediction value exceeds a preset range, the load time compensation coefficient is updated, and the current refrigerating capacity prediction value and the water outlet temperature time compensation value are determined again. Through comparing the real-time refrigerating capacity with the refrigerating capacity prediction value, the real-time refrigerating capacity of the air conditioner in the working process and the deviation condition of the predicted refrigerating capacity obtained through calculation can be monitored at any time. When the deviation is too large, it indicates that the working condition of the air conditioner and the outdoor weather parameters are greatly changed, so that the reference water return temperature obtained by comparison and the calculated water outlet temperature time compensation value are not applicable, and further deviation of the air conditioner can be avoided by reacquiring the outdoor weather parameters and recalculating the refrigerating capacity prediction value and the water outlet temperature compensation value under the condition, thereby realizing real-time calibration of the air conditioner. The normal work of the air conditioner is prevented from being influenced by external factors, so that the technical effects of optimizing the product control flow, improving the control accuracy, improving the product performance and reducing the energy consumption of the product are achieved.

In one embodiment of the present invention, preferably, the processor 704 is further configured to execute the computer program to implement the step of: sending a temperature control instruction to adjust the temperature control target value according to a preset frequency according to a time delay control algorithm.

In the embodiment, a time delay control algorithm is adopted in the control method, a temperature control instruction is calculated and sent, and the intelligent temperature control target value is adjusted, so that the influence of the time delay effect on the calculation result can be reduced, the accuracy and the reliability of the control instruction can be greatly improved, the air conditioner can select the working state which is most fit with the current load under the guidance of the control method, and the deviation of the air conditioner in the working process can be further reduced. Furthermore, the technical effects of optimizing the product control flow, improving the control accuracy, improving the product performance and reducing the energy consumption of the product are achieved.

In an embodiment of the third aspect of the present disclosure which is not part of the invention, there is provided an air conditioner including the device for controlling an air conditioner as described in any of the embodiments, such that the air conditioner includes all the benefits of the device for controlling an air conditioner as described in any of the embodiments.

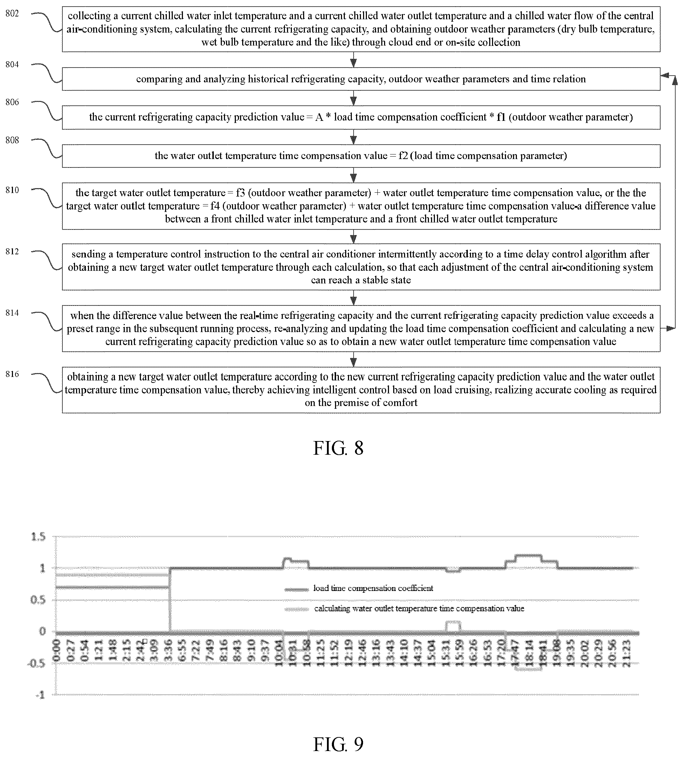

In a specific embodiment of the invention, as shown in FIG. 8, when the method for controlling an air conditioner is used for controlling the operation of a central air conditioning system, the specific steps are as follows:

step 802, collecting a current chilled water inlet temperature and a current chilled water outlet temperature and a chilled water flow of the central air-conditioning system, calculating the current refrigerating capacity, and obtaining outdoor weather parameters (dry bulb temperature, wet bulb temperature and the like) through cloud end or on-site collection.

In the step, the air conditioner collects the current chilled water inlet temperature and water outlet temperature and current chilled water inlet flow and water outlet flow in real time and calculates the current refrigerating capacity of the air conditioner according to the current chilled water inlet temperature and water outlet temperature and current chilled water inlet flow and water outlet flow, and the current refrigerating capacity is used for subsequent comparison and reference. Meanwhile, the air conditioner also obtains current outdoor weather parameters through cloud data downloading or sensors arranged on the site, wherein the outdoor weather parameters include various weather parameters such as dry bulb temperature, wet bulb temperature and the like.

Step 804, comparing and analyzing historical refrigerating capacity, outdoor weather parameters and time relation.

In the step, the comparison relation between the historical refrigerating capacity and the outdoor weather parameters in each time period is obtained by comparing the historical refrigerating capacity with the outdoor weather parameters, and the historical refrigerating capacity corresponding to different time periods and different outdoor environments can be directly reflected through the comparison relation, so that the control method can conveniently obtain the historical refrigerating capacity which can be used for reference through the collected current outdoor weather parameters.

Step 806, by the formula: the current refrigerating capacity prediction value = A * load time compensation coefficient * f1 (outdoor weather parameter), calculating the prediction value of the current refrigerating capacity, wherein A is a constant larger than zero, the load time compensation coefficient is preset according to the current use of the building, and f1 (outdoor weather parameter) is the historical refrigerating capacity corresponding to the current outdoor weather parameters.

Step 808, by the formula: the water outlet temperature time compensation value = f2 (load time compensation parameter), calculating the water outlet temperature time compensation value, wherein f2 (load time compensation coefficient) is the historical water outlet temperature corresponding to the current outdoor weather parameters, and the load time compensation coefficient is inversely proportional to the calculated water outlet temperature time compensation value as shown in FIG. 9.

Step 810, by the formula: the target water outlet temperature = f3 (outdoor weather parameter) + water outlet temperature time compensation value, or by the formula: the target water outlet temperature = f4 (outdoor weather parameter) + water outlet temperature time compensation value-a difference value between a front chilled water inlet temperature and a front chilled water outlet temperature, calculating the target water outlet temperature. The reference water outlet temperature = f3 (outdoor weather parameter), and f3 (outdoor weather parameter) is the historical water outlet temperature corresponding to the outdoor weather parameters; the reference water return temperature = f4 (outdoor weather parameter), and f4 (outdoor weather parameter) is the historical water return temperature corresponding to the outdoor weather parameters. The target water outlet temperature is a calculated water outlet temperature reference value, and the reference value corresponds to the current environmental load. Here, a load prediction map in the control method according to the load cruising is shown in FIG. 10.

Step 812, sending a temperature control instruction to the air conditioner intermittently according to a time delay control algorithm after obtaining a new target water outlet temperature through each calculation, so that each adjustment of the air conditioner system can reach a stable state.

Step 814, when the difference value between the real-time refrigerating capacity and the current refrigerating capacity prediction value exceeds a preset range in the subsequent running process, re-analyzing and updating the load time compensation coefficient and calculating a new current refrigerating capacity prediction value so as to obtain a new water outlet temperature time compensation value.

The control method is provided with a real-time monitoring and calibration method. When the difference between the real-time refrigerating capacity and the prediction value is too large, the prediction value is judged to be invalid, and a new prediction value is obtained through recalculation, so that the correction is completed.

Step 816, obtaining a new target water outlet temperature according to the new current refrigerating capacity prediction value and the water outlet temperature time compensation value, thereby achieving intelligent control based on load cruising. The present disclosure realizes accurate cooling as required on the premise of comfort.

In a specific embodiment of the disclosure which is not part of the invention, as shown in FIG. 11, a system diagram of an intelligent temperature device for controlling an air conditioner based on load cruising includes: a compressor 12, a condenser 14, a throttle valve 16, and an evaporator 18. A refrigerant is sequentially circulated in the four parts, refrigerant (cooling agent) high-temperature high-pressure gas coming out of the compressor 12 flows through the condenser 14, the temperature is reduced and the pressure is reduced. The condenser 14 carries heat to a cooling water tower 22 for discharge through a cooling water pump 20 of a cooling water system, the refrigerant continues to flow through the throttle valve 16 to form low-temperature low-pressure liquid, flows through the evaporator 18, absorbs heat, and is compressed. Two ends of the evaporator 18 are connected with a chilled water circulating system, the chilled water circulating system includes a chilled water pump 24, a water separator 26 and a water collector 28, the temperature of the chilled water is reduced by the heat absorbed by the refrigerant at this time, low-temperature water flows to a user end, heat exchange is carried out through a fan coil, and cold air is blown out. The intelligent temperature control device 10 is in direct communication with the refrigerating master machine, collects temperature sensor information of the master machine, and can collect flow information of the master machine, having a display interface, displaying various sensor parameters of the master machine, an intelligent temperature control process curve and load prediction. A historical refrigerating capacity security system can carry out energy-saving operation on the basis of providing comfortable service, and can also display other functional charts and parameters.

The present invention provides a method for controlling an air conditioner, which carries out intelligent temperature control on a central air conditioner based on load cruising. The device firstly obtains a refrigerating capacity prediction relational formula by comparing and analyzing the relation between historical refrigerating capacity and outdoor weather parameters and time, then obtains an intelligent temperature control target value, and corrects the intelligent temperature control target value along with time according to the load prediction so as to obtain the intelligent temperature control target value suitable for the refrigerating capacity requirements of the current moment and the next moment.

In the description of the present invention, the term "plurality" refers to two or more. Unless specifically defined otherwise, the terms "upper", "lower", and the like indicate oriental or positional relationships that are based on the oriental or positional relationships shown in the drawings, which are merely intended to facilitate the description of the present invention and to simplify the description and are not intended to indicate or imply that a particular orientation of the referenced device or element is required, or constructions and operations are in particular orientations. Therefore, they are not to be construed as limiting the present invention. The terms "connected", "mounted", "fixed", and the like are to be construed broadly, e.g., "connected" may be a fixed connection, a releasable connection, or an integral connection. "Connected" may be directly connected or indirectly connected through an intermediary. The specific meaning of the terms in this invention will be understood by those of ordinary skill in the art, as the case may be.

## Claims

1.  A method for controlling an air conditioner comprising a chilled water circulating system, comprising:

    determining, according to a historical time, a historical refrigerating capacity and historical outdoor weather parameters corresponding to the historical time, and current outdoor weather parameters, a calculation formula of a current refrigerating capacity prediction value to be:

    the current refrigerating capacity prediction value = A * load time compensation coefficient * f1;

    determining a water outlet temperature time compensation value according to the current outdoor weather parameters and a historical water outlet temperature;
    wherein the step of determining a water outlet temperature time compensation value according to the current outdoor weather parameters and a historical water outlet temperature specifically comprises:

       acquiring the historical water outlet temperature corresponding to the current outdoor weather parameters; and
       determining the water outlet temperature time compensation value according to the load time compensation coefficient and the historical water outlet temperature; and
       determining a temperature control target value according to a reference water outlet temperature or a reference water return temperature and the water outlet temperature time compensation value and a water outlet temperature of a master machine of the air conditioner is controlled through the temperature control target value,
       wherein A is a constant greater than zero, the load time compensation coefficient is preset according to a current use of a building, and f1 is the historical refrigerating capacity corresponding to the current outdoor weather parameters.

2.  The method for controlling an air conditioner according to claim 1, further comprising:

    acquiring the historical water outlet temperature corresponding to the current outdoor weather parameters, and taking the historical water outlet temperature as the reference water outlet temperature; and
    taking a sum of the reference water outlet temperature and the water outlet temperature time compensation value as a target water outlet temperature.

3. The method for controlling an air conditioner according to claim 1, comprising

acquiring a historical water return temperature corresponding to the outdoor weather parameters, and taking the historical water return temperature as the reference water return temperature; and

subtracting a difference value between a current chilled water inlet temperature and a current chilled water outlet temperature from a sum of the reference water return temperature and the water outlet temperature time compensation value to obtain a target water outlet temperature.

4. The method for controlling an air conditioner according to any one of claims 1 to 3, further comprising:

determining a real-time refrigerating capacity according to the current chilled water inlet temperature, the current chilled water outlet temperature and chilled water flow; and

when a difference value between the real-time refrigerating capacity and the current refrigerating capacity prediction value exceeds a preset range, updating the load time compensation coefficient to determine the current refrigerating capacity prediction value and the water outlet temperature time compensation value again.

5. The method for controlling an air conditioner according to any one of claims 1 to 4, further comprising:
sending a temperature control instruction to adjust the temperature control target value according to a preset frequency.

**Patentansprüche**

1. Verfahren zum Steuern einer Klimaanlage mit einem Kaltwasser-Zirkulationssystem, das Folgendes beinhaltet:

Bestimmen, gemäß einer historischen Zeit, einer historischen Kühlleistung und historischer Außenwetterparameter entsprechend der historischen Zeit sowie aktueller Außenwetterparameter, einer folgenden Berechnungsformel für einen aktuellen Kühlleistungsvorhersagewert:

$$\text{aktueller Kühlleistungsvorhersagewert} = A * \text{Lastzeitkompensationskoeffizient} * \text{f1};$$

Bestimmen eines Wasserauslasstemperatur-Zeitkompensationswerts gemäß den aktuellen Außenwetterparametern und einer historischen Wasserauslasstemperatur;
wobei der Schritt des Bestimmens eines Wasserauslasstemperatur-Zeitkompensationswerts gemäß den aktuellen Außenwetterparametern und einer historischen Wasserauslasstemperatur speziell Folgendes beinhaltet:

Erfassen der historischen Wasserauslasstemperatur entsprechend den aktuellen Außenwetterparametern; und

Bestimmen des Wasserauslasstemperatur-Zeitkompensationswerts gemäß dem Lastzeitkompensationskoeffizienten und der historischen Wasserauslasstemperatur; und

Bestimmen eines Temperaturregelungssollwerts gemäß einer Referenz-Wasserauslasstemperatur oder einer Referenz-Wasserrücklauftemperatur und dem Wasserauslasstemperatur-Zeitkompensationswert, und eine Wasserauslasstemperatur einer Master-Maschine der Klimaanlage wird durch den Temperaturregelungssollwert geregelt,

wobei A eine Konstante größer als Null ist, der Lastzeitkompensationskoeffizient gemäß einer aktuellen Nutzung eines Gebäudes voreingestellt ist und f1 die historische Kühlleistung entsprechend den aktuellen Außenwetterparametern ist.

2. Verfahren zum Steuern einer Klimaanlage nach Anspruch 1, das ferner Folgendes beinhaltet:

Erfassen der historischen Wasserauslasstemperatur entsprechend den aktuellen Außenwetterparametern und Nehmen der historischen Wasserauslasstemperatur als Referenz-Wasserauslasstemperatur; und

Nehmen einer Summe aus der Referenz-Wasserauslasstemperatur und dem Wasserauslasstemperatur-Zeitkompensationswert als Soll-Wasserauslasstemperatur.

3. Verfahren zum Steuern einer Klimaanlage gemäß Anspruch 1, das Folgendes beinhaltet:

Erfassen einer historischen Wasserrücklauftemperatur entsprechend den Außenwetterparametern und Nehmen der historischen Wasserrücklauftemperatur als Referenz-Wasserrücklauftemperatur; und
Subtrahieren eines Differenzwerts zwischen einer aktuellen Kaltwassereinlasstemperatur und einer aktuellen Kaltwasserauslasstemperatur von einer Summe aus der Referenz-Wasserrücklauftemperatur und dem Wasserauslasstemperatur-Zeitkompensationswert, um eine Soll-Wasserauslasstemperatur zu erhalten.

4. Verfahren zum Steuern einer Klimaanlage nach einem der Ansprüche 1 bis 3, das ferner Folgendes beinhaltet:

Bestimmen einer Echtzeit-Kühlleistung gemäß der aktuellen Kaltwassereinlasstemperatur, der aktuellen Kaltwasserauslasstemperatur und dem Kaltwasserfluss; und
Aktualisieren, wenn ein Differenzwert zwischen der Echtzeit-Kühlleistung und dem aktuellen Kühlleistungsvorhersagewert einen voreingestellten Bereich überschreitet, des Lastzeitkompensationskoeffizienten, um den aktuellen Kühlleistungsvorhersagewert und den Wasserauslasstemperatur-Zeitkompensationswert erneut zu bestimmen.

5. Verfahren zum Steuern einer Klimaanlage gemäß einem der Ansprüche 1 bis 4, das ferner Folgendes beinhaltet:
Senden eines Temperaturregelbefehls zum Justieren des Temperaturregelungssollwerts gemäß einer voreingestellten Frequenz.

## Revendications

1. Procédé de commande d'un climatiseur comprenant un système de circulation d'eau réfrigérée, le procédé comprenant les étapes consistant à :

déterminer, selon un temps historique, une puissance frigorifique historique, des paramètres météorologiques extérieurs historiques correspondant au temps historique et des paramètres météorologiques extérieurs courants, une formule de calcul d'une valeur de prédiction de puissance frigorifique courante comme étant :

la valeur de prédiction de puissance frigorifique courante = A * coefficient de compensation de temps de charge * f1 ;

déterminer une valeur de compensation temporelle de température de sortie d'eau selon les paramètres météorologiques extérieurs courants et une température de sortie d'eau historique ;
l'étape consistant à déterminer une valeur de compensation temporelle de température de sortie d'eau selon les paramètres météorologiques extérieurs courants et une température de sortie d'eau historique comprenant spécifiquement les étapes consistant à :

acquérir la température de sortie d'eau historique correspondant aux paramètres météorologiques extérieurs courants ; et
déterminer la valeur de compensation temporelle de température de sortie d'eau selon le coefficient de compensation de temps de charge et la température de sortie d'eau historique ; et
déterminer une valeur cible de commande de température selon une température de sortie d'eau de référence ou une température de retour d'eau de référence et la valeur de compensation temporelle de température de sortie d'eau, une température de sortie d'eau d'une machine maîtresse du climatiseur étant commandée par l'intermédiaire de la valeur cible de commande de température,
où A est une constante supérieure à zéro, le coefficient de compensation de temps de charge est prédéfini selon une utilisation courante d'un bâtiment, et f1 est la puissance frigorifique historique correspondant aux paramètres météorologiques extérieurs courants.

2. Procédé de commande d'un climatiseur selon la revendication 1, comprenant en outre les étapes consistant à :

acquérir la température de sortie d'eau historique correspondant aux paramètres météorologiques extérieurs courants et prendre la température de sortie d'eau historique comme la température de sortie d'eau de référence ; et
prendre une somme de la température de sortie d'eau de référence et de la valeur de compensation temporelle de température de sortie d'eau comme une température de sortie d'eau cible.

**3.** Procédé de commande d'un climatiseur selon la revendication 1, comprenant les étapes consistant à :

acquérir une température de retour d'eau historique correspondant aux paramètres météorologiques extérieurs et prendre la température de retour d'eau historique comme la température de retour d'eau de référence ; et soustraire une valeur de différence entre une température d'entrée d'eau réfrigérée courante et une température de sortie d'eau réfrigérée courante d'une somme de la température de retour d'eau de référence et de la valeur de compensation temporelle de température de sortie d'eau afin d'obtenir une température de sortie d'eau cible.

**4.** Procédé de commande d'un climatiseur selon l'une quelconque des revendications 1 à 3, comprenant en outre les étapes consistant à :

déterminer une puissance frigorifique en temps réel selon la température d'entrée d'eau réfrigérée courante, la température de sortie d'eau réfrigérée courante et le débit d'eau réfrigérée ; et lorsqu'une différence entre la puissance frigorifique en temps réel et la valeur de prédiction de puissance frigorifique courante dépasse une plage prédéfinie, mettre à jour le coefficient de compensation de temps de charge afin de déterminer à nouveau la valeur de prédiction de puissance frigorifique courante et la valeur de compensation temporelle de température de sortie d'eau.

**5.** Procédé de commande d'un climatiseur selon l'une quelconque des revendications 1 à 4, comprenant en outre l'étape consistant à :
envoyer une instruction de commande de température pour régler la valeur cible de commande de température selon une fréquence prédéfinie.

START

S102 — determining, according to a historical time, a historical refrigerating capacity and historical outdoor weather parameters corresponding to the historical time, and current outdoor weather parameters, a relational expression of a current refrigerating capacity prediction value

S104 — determining a water outlet temperature time compensation value according to the current outdoor weather parameters and a historical water outlet temperature

S106 — determining, according to a reference water outlet temperature or a reference water return temperature and the water outlet temperature time compensation value, a temperature control target value so as to control a water outlet temperature of a master machine

END

FIG. 1

START

S202 — determining, according to a historical time, a historical refrigerating capacity and historical outdoor weather parameters corresponding to the historical time, and current outdoor weather parameters, a relational expression of a current refrigerating capacity prediction value

S204 — acquiring the historical water outlet temperature corresponding to the current outdoor weather parameters

S206 — determining the water outlet temperature time compensation value according to the load time compensation coefficient and the historical water outlet temperature

S208 — determining, according to a reference water outlet temperature or a reference water return temperature and the water outlet temperature time compensation value, a temperature control target value so as to control a water outlet temperature of a master machine

END

FIG. 2

START

S302 — determining, according to a historical time, a historical refrigerating capacity and historical outdoor weather parameters corresponding to the historical time, and current outdoor weather parameters, a relational expression of a current refrigerating capacity prediction value

S304 — determining a water outlet temperature time compensation value according to the current outdoor weather parameters and a historical water outlet temperature

S306 — determining, according to a reference water outlet temperature and the water outlet temperature time compensation value, a temperature control target value so as to control a water outlet temperature of a master machine

S308 — acquiring the historical water outlet temperature corresponding to the current outdoor weather parameters, and taking the historical water outlet temperature as the reference water outlet temperature

S310 — taking a sum of the reference water outlet temperature and the water outlet temperature time compensation value as a target water outlet temperature

END

FIG. 3

START

S402 — determining, according to a historical time, a historical refrigerating capacity and historical outdoor weather parameters corresponding to the historical time, and current outdoor weather parameters, a relational expression of a current refrigerating capacity prediction value

S404 — determining a water outlet temperature time compensation value according to the current outdoor weather parameters and a historical water outlet temperature

S406 — determining, according to a reference water return temperature and the water outlet temperature time compensation value, a temperature control target value so as to control a water outlet temperature of a master machine

S408 — acquiring a historical water return temperature corresponding to the outdoor weather parameters, and taking the historical water return temperature as the reference water return temperature

S410 — subtracting a difference value between a current chilled water inlet temperature and a current chilled water outlet temperature from a sum of the reference water return temperature and the water outlet temperature time compensation value to obtain a target water outlet temperature

END

FIG. 4

START

S502 — determining, according to a historical time, a historical refrigerating capacity and historical outdoor weather parameters corresponding to the historical time, and current outdoor weather parameters, a relational expression of a current refrigerating capacity prediction value

S504 — determining a water outlet temperature time compensation value according to the current outdoor weather parameters and a historical water outlet temperature

S506 — determining, according to a reference water outlet temperature or a reference water return temperature and the water outlet temperature time compensation value, a temperature control target value so as to control a water outlet temperature of a master machine

S508 — determining real-time refrigerating capacity according to the current chilled water inlet temperature, the current chilled water outlet temperature and chilled water flow

S510 — when a difference value between the real-time refrigerating capacity and the current refrigerating capacity prediction value exceeds a preset range, updating the load time compensation coefficient to determine the current refrigerating capacity prediction value and the water outlet temperature time compensation value again

END

FIG. 5

START

S602 — determining, according to a historical time, a historical refrigerating capacity and historical outdoor weather parameters corresponding to the historical time, and current outdoor weather parameters, a relational expression of a current refrigerating capacity prediction value

S604 — determining a water outlet temperature time compensation value according to the current outdoor weather parameters and a historical water outlet temperature

S606 — determining, according to a reference water outlet temperature or a reference water return temperature and the water outlet temperature time compensation value, a temperature control target value so as to control a water outlet temperature of a master machine

S608 — sending a temperature control instruction to adjust the temperature control target value according to a preset frequency according to a time delay control algorithm

END

FIG. 6

device for controlling air conditioner 700

memory 702

processor 704

FIG. 7

802 collecting a current chilled water inlet temperature and a current chilled water outlet temperature and a chilled water flow of the central air-conditioning system, calculating the current refrigerating capacity, and obtaining outdoor weather parameters (dry bulb temperature, wet bulb temperature and the like) through cloud end or on-site collection

804 comparing and analyzing historical refrigerating capacity, outdoor weather parameters and time relation

806 the current refrigerating capacity prediction value = A * load time compensation coefficient * f1 (outdoor weather parameter)

808 the water outlet temperature time compensation value = f2 (load time compensation parameter)

810 the target water outlet temperature = f3 (outdoor weather parameter) + water outlet temperature time compensation value, or the the target water outlet temperature = f4 (outdoor weather parameter) + water outlet temperature time compensation value-a difference value between a front chilled water inlet temperature and a front chilled water outlet temperature

812 sending a temperature control instruction to the central air conditioner intermittently according to a time delay control algorithm after obtaining a new target water outlet temperature through each calculation, so that each adjustment of the central air-conditioning system can reach a stable state

814 when the difference value between the real-time refrigerating capacity and the current refrigerating capacity prediction value exceeds a preset range in the subsequent running process, re-analyzing and updating the load time compensation coefficient and calculating a new current refrigerating capacity prediction value so as to obtain a new water outlet temperature time compensation value

816 obtaining a new target water outlet temperature according to the new current refrigerating capacity prediction value and the water outlet temperature time compensation value, thereby achieving intelligent control based on load cruising, realizing accurate cooling as required on the premise of comfort

FIG. 8

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105571063 B